# FASCICULE DE BREVET EUROPEEN

(11) **EP 1 588 872 B1**
(45) Date de publication et mention de la délivrance du brevet: **18.11.2009**
(21) Numéro de dépôt: 05290770.6
(22) Date de dépôt: 07.04.2005
(51) Int. Cl.: B60G 17/00, F16F 9/00, G01B 7/14, G01B 17/00, G01B 11/14, G01F 23/296

(54) **Procédé de mesure d'enfoncement d'un amortisseur et atterrisseur d'aeronef faisant application**
Verfahren zur Messung des Eindrückens eines Stoßdämpfers und dessen Anwendung in einem Flugzeugfahrgestell
Method of measurement of the depression of a shock absorber and its use in an aircraft undercarriage

(30) Priorité: 19.04.2004 FR 0404091
(43) Date de publication de la demande: 26.10.2005
(73) Titulaire: MESSIER-DOWTY SA, F-78140 Velizy Villacoublay (FR)
(72) Inventeur: Seror, Christelle, 92290 Chatenay Malabry (FR)
(74) Mandataire: Parzy, Benjamin Alain

(56) Documents cités:
- WO-A-2004/028902
- US-A- 5 104 144
- PATENT ABSTRACTS OF JAPAN vol. 1999, no. 08, 30 juin 1999 (1999-06-30) -& JP 11 072132 A (JAPAN RADIO CO LTD), 16 mars 1999 (1999-03-16)

## Description

L'invention concerne un procédé de mesure d'un niveau théorique de fluide hydraulique dans un amortisseur, ainsi qu'un atterrisseur d'aéronef faisant application.

### ARRIERE-PLAN DE L'INVENTION

On connaît, du document JP 11 072132 un amortisseur comportant un amortisseur comportant une première partie et une deuxième partie mobiles entre elles à coulissement, l'amortisseur étant équipé d'un ensemble émetteur/récepteur d'onde disposé sur la première partie mobile, l'émetteur étant disposé pour émettre l'onde en direction de la deuxième partie mobile; et le récepteur étant apte à recevoir l'onde après réflexion de celle-ci sur un obstacle formé par une pièce mécanique solidaire de la deuxième partie mobile.

En mesurant le temps de trajet de l'onde, on en déduit un enfoncement de l'amortisseur.

Dans une variante mentionnée dans ce même document, l'amortisseur est équipé d'un ensemble émetteur/récepteur adapté à envoyer une onde sur un obstacle formé par une surface libre d'un fluide hydraulique contenu dans l'amortisseur ou une pièce mécanique délimitant cette surface libre.

En mesurant le temps de trajet de l'onde, on en déduit un niveau réel de fluide hydraulique dans l'amortisseur. En connaissant la relation entre le niveau théorique de fluide hydraulique dans l'amortisseur et son enfoncement, on en déduit un enfoncement de l'amortisseur.

Cependant, l'application de cette méthode suppose que l'amortisseur ait été correctement conditionné et n'ait pas subi de fuites de fluide hydraulique, de sorte que le niveau théorique de fluide hydraulique et le niveau réel de fluide hydraulique coïncident.

Si une quantité incorrecte de fluide hydraulique a été introduite dans l'amortisseur ou si l'amortisseur a subi des fuites, alors le niveau réel de fluide hydraulique peut être différent du niveau théorique de fluide hydraulique, de sorte que l'on en déduit un mauvais enfoncement.

### OBJET DE L'INVENTION

L'invention a pour objet un procédé de mesure permettant de déterminer un niveau théorique de fluide hydraulique dans l'amortisseur et elle est défini dans les revendications principales.

Le procédé de mesure de l'enfoncement d'un amortisseur comprenant une première et une deuxième parties mobiles entre elles à coulissement,' comporte, selon l'invention, les étapes de :
- émettre une onde apte à se propager sans support matériel à l'aide d'un émetteur disposé sur la première partie mobile en direction de la deuxième partie mobile;
- recevoir l'onde émise à l'aide d'un récepteur disposé sur la première partie mobile, après réflexion de l'onde émise sur un obstacle mobile solidaire de la deuxième partie mobile ;
- déduire un niveau théorique de fluide hydraulique à partir d'une mesure d'une caractéristique de l'onde ainsi reçue.

La mesure permet de déterminer un enfoncement de l'amortisseur, et, en exploitant la relation entre enfoncement et niveau théorique de fluide hydraulique ou encore en utilisant des tables, on en déduit le niveau théorique de fluide hydraulique qui devrait correspondre à l'enfoncement si l'amortisseur est correctement conditionné.

Le procédé de l'invention comporte en outre les étapes de :
- émettre une deuxième onde apte à se propager sans support matériel à l'aide d'un deuxième émetteur disposé sur la première partie mobile en direction de la deuxième partie mobile ;
- recevoir l'onde émise à l'aide d'un deuxième récepteur disposé sur la première partie mobile après réflexion de l'onde émise sur une surface libre du fluide hydraulique ou sur une pièce mécanique délimitant cette surface libre ;
- déduire un niveau réel de fluide hydraulique de la mesure d'une caractéristique de l'onde ainsi reçue.

Le niveau réel de fluide hydraulique est alors déterminé de façon similaire à l'enfoncement de l'amortisseur par deux ensembles émetteur/récepteur fonctionnant parallèlement.

On remarquera que les deux ensembles déterminent bien deux paramètres différents : le premier ensemble permet de déterminer un niveau théorique de fluide hydraulique, tandis que le deuxième ensemble permet de déterminer un niveau réel de fluide hydraulique.

Le procédé de l'invention comporte l'étape de comparer le niveau réel de fluide hydraulique au niveau théorique de fluide hydraulique. Cette comparaison permet d'en déduire une information sur le conditionnement de l'amortisseur.

L'invention concerne également un atterrisseur d'aéronef comportant un amortisseur avec une première partie et une deuxième partie mobiles entre elles à coulissement, comportant un premier ensemble émetteur/récepteur d'onde disposé sur la première partie mobile, l'émetteur étant disposé pour émettre une première onde en direction de la deuxième partie mobile, et le récepteur étant apte à recevoir la première onde après réflexion de celle-ci sur un obstacle formé par une pièce mécanique solidaire de la deuxième partie mobile, et un deuxième ensemble émetteur/récepteur indépendant disposé sur la première partie mobile, l'émetteur étant disposé pour émettre une deuxième onde en direction de la deuxième partie mobile, et le récepteur étant apte à recevoir la deuxième onde après réflexion de celle-ci sur un obstacle formé par une surface libre du fluide hydraulique contenu dans l'amortisseur ou une pièce mécanique délimitant cette surface libre.

Avantageusement, les ensembles émetteur/récepteur sont disposés sur l'atterrisseur de telle sorte que le cheminement des ondes émises par les ensembles émetteur/récepteur soit en totalité interne à l'amortisseur.

### BREVE DESCRIPTION DES DESSINS

L'invention sera mieux comprise à la lumière de la description qui suit en référence aux figures des dessins annexés parmi lesquelles :
- la figure 1 est une vue en coupe partielle d'un atterrisseur d'aéronef selon l'invention ;
- la figure 2 est une vue en coupe partielle d'un autre atterrisseur d'aéronef selon l'invention ;
- la figure 3 est une vue en coupe partielle d'un amortisseur d'aéronef équipé d'un piston séparateur ;
- la figure 4 est une vue en coupe partielle d'un amortisseur d'aéronef équipé d'un réflecteur flottant.

### DESCRIPTION DETAILLEE DE L'INVENTION

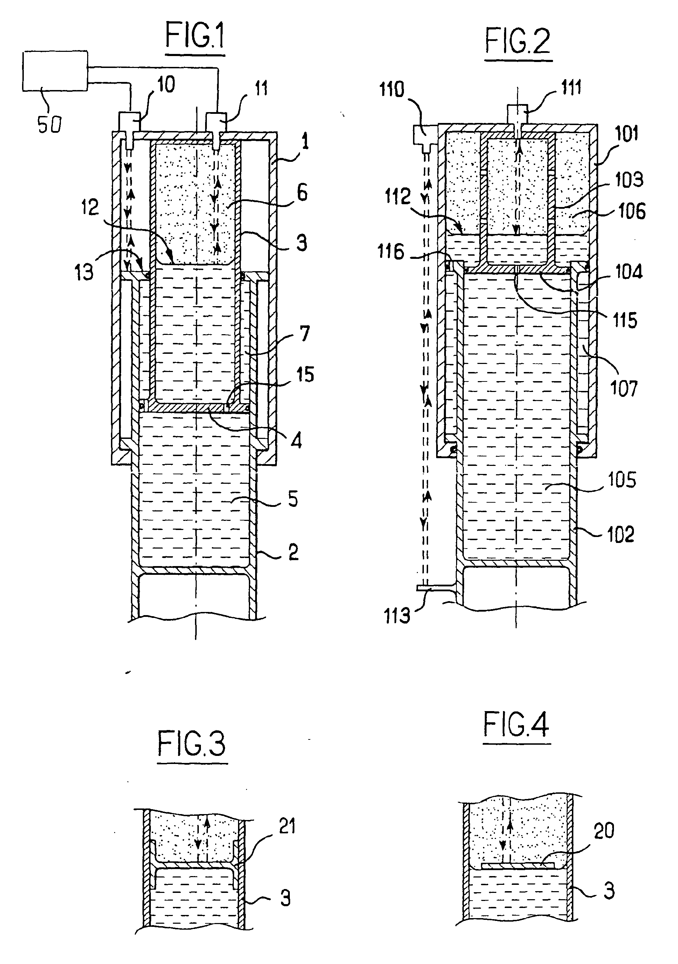

Comme cela est illustré à la figure 1, l'invention s'applique à un atterrisseur équipé d'un amortisseur dit classique, par ailleurs bien connu.

Un tel amortisseur comporte un caisson 1 dans lequel coulisse une tige 2. Dans le cas d'un atterrisseur direct, le caisson est directement relié à l'aéronef (le plus souvent au moyen d'une articulation), et la tige porte à son extrémité inférieure les roues de l'aéronef.

Dans la tige 2 s'étend un tube plongeur 3 terminé par un diaphragme 4. L'amortisseur ainsi constitué comporte trois chambres fonctionnelles :
- une première chambre dite chambre d'huile 5, qui s'étend dans la tige 2 est qui est fermée par le diaphragme 4 ;
- une deuxième chambre dite chambre d'air 6, qui correspond au volume interne du tube plongeur 3 ;
- une troisième chambre annulaire dite chambre de détente 7, qui s'étend entre la tige 2 et le tube plongeur 3.

L'amortisseur contient du fluide hydraulique (symbolisé sur les figures par des traits horizontaux) qui, dans la position détendue de l'amortisseur représentée ici, remplit entièrement la chambre d'huile 5 et la chambre de détente 7, et remplit partiellement la chambre d'air 6. Le volume restant de cette dernière est rempli d'azote (symbolisé sur les figures par des points) sous pression.

Lors d'un enfoncement de l'amortisseur (par exemple lors d'un atterrissage), la tige 2 coulisse dans le caisson, ce qui provoque le transfert de fluide hydraulique depuis la chambre d'huile 5 vers la chambre d'air 6 et la chambre de détente 7, via des orifices de laminage 15 qui traversent le diaphragme 4. Le niveau de fluide hydraulique dans la chambre d'air 6 augmente ainsi progressivement au fur et à mesure de l'enfoncement de l'amortisseur.

Selon l'invention, l'amortisseur est équipé d'une premier ensemble émetteur/récepteur 10 qui est monté à l'extrémité supérieure du caisson 1 pour émettre une onde en direction de l'extrémité supérieure 13 de la tige 2.

Après réflexion sur ladite extrémité supérieure 13, l'onde émise revient vers l'ensemble émetteur/récepteur 10 pour être reçue. Un organe de mesure associé (l'organe de mesure pouvant ou non être intégré dans ledit ensemble) mesure le temps écoulé entre l'émission et la réception de l'onde. Ce temps est représentatif de la position de l'extrémité supérieure de la tige 2 dans le caisson 1, et donc de l'enfoncement de l'amortisseur.

On obtient ainsi une mesure en temps réel de l'enfoncement, qui ne fait appel à aucun support spécifique de propagation puisque l'onde se propage tout simplement dans l'air.

Il est à remarquer que l'onde se propage ici dans une partie interne du caisson à l'abri des pollutions extérieures.

On sait que la courbe d'enfoncement de l'amortisseur en fonction de la charge dépend de plusieurs paramètres de conditionnement de l'amortisseur, comme la pression initiale d'azote (mesurée lorsque l'amortisseur est détendu), et le volume de fluide hydraulique contenu dans l'amortisseur. Si, en raison de fuites, de l'azote ou du fluide hydraulique s'échappe de l'amortisseur, il se peut que l'enfoncement réel de l'amortisseur ne corresponde pas à l'enfoncement théorique attendu compte tenu du conditionnement nominal.

L'invention permet de vérifier à tout moment l'état de conditionnement de l'amortisseur par le moyen suivant : on équipe l'amortisseur d'un deuxième ensemble émetteur/récepteur 11, également disposé à l'extrémité supérieure du caisson 1, pour envoyer une onde en direction de la tige 2 de sorte que l'onde de réfléchisse sur la surface libre 12 du fluide hydraulique dans la chambre d'air 6. Après réflexion sur ladite surface libre 12, l'onde est reçue par le deuxième ensemble émetteur/récepteur 11. Un organe de mesure associé (l'organe de mesure pouvant ou non être intégré dans ledit ensemble) mesure le temps écoulé entre l'émission et la réception de l'onde. Ce temps est représentatif du niveau réel de fluide hydraulique dans la chambre d'air 6.

Il est alors aisé de comparer ce niveau réel à un niveau théorique calculé à partir de la mesure de l'enfoncement de l'amortisseur obtenue au moyen du premier ensemble émetteur/récepteur 10, compte tenu des paramètres de conditionnement nominaux. Si le niveau réel ne correspond pas au niveau théorique, à une marge d'erreur prédéterminée près, alors on en déduit que l'amortisseur est mal conditionné ou que des fuites se sont produites. Il est alors possible de générer automatiquement une consigne de maintenance à destination du pilote de l'aéronef, ou des équipes de maintenance au sol.

Pour cela, l'aéronef est de préférence équipé d'un calculateur 50 adapté à calculer un niveau théorique de fluide hydraulique dans l'amortisseur à partir de la mesure du temps de parcours de l'onde émise par le premier ensemble émetteur/récepteur 10, à calculer un niveau réel de fluide hydraulique dans l'amortisseur à partir de la mesure du temps de parcours de l'onde émise par le deuxième ensemble émetteur/récepteur 11, à comparer ces deux niveaux, et à générer le cas échéant une consigne de maintenance à destination du pilote ou des équipes de maintenance au sol.

En variante, le calculateur 50 peut être externe à l'aéronef et être connecté aux systèmes de bord de l'aéronef (par une liaison par câble ou encore à distance) par exemple à l'occasion d'une visite de maintenance. Le calculateur est agencé pour provoquer l'émission d'ondes par les ensembles émetteur/récepteur 10,11, pour en exploiter les temps de parcours et vérifier si l'amortisseur est correctement conditionné.

Comme cela est illustré à la figure 3, certains amortisseurs sont équipés d'un piston séparateur 21 coulissant librement à l'intérieur du tube plongeur 3 et séparant l'azote du fluide hydraulique. Dans ce cas, l'onde émise par le deuxième ensemble émetteur/récepteur 11 se réfléchira alors sur ledit piston séparateur 21.

Pour améliorer la réflexion de l'onde émise par le deuxième ensemble émetteur/récepteur 11, il est possible, comme cela est illustré à la figure 4, de prévoir un réflecteur 20 flottant à la surface libre 12 du fluide hydraulique. Ce réflecteur pourra recouvrir totalement ou seulement partiellement ladite surface libre 12.

Le réflecteur 20 ou le piston séparateur 21 sont naturellement mobiles et s'enfoncent progressivement dans l'amortisseur au fur et à mesure de l'enfoncement de la tige 2 dans le caisson 1.

On remarquera que les deux ensembles émetteur/récepteur 10 et 11 sont disposés en haut du caisson, ce qui facilite leur liaison électrique avec l'aéronef, et évite l'installation toujours délicate de câbles courant le long de l'atterrisseur.

L'invention s'applique également à un atterrisseur d'aéronef équipé d'un amortisseur dit inversé, tel que celui illustré à la figure 2. Cet amortisseur comprend un caisson 101, une tige 102, et un tube plongeur 103 portant un diaphragme 104. L'amortisseur inversé comporte également une chambre d'huile 105 et une chambre d'air 106 dans laquelle du fluide hydraulique en provenance de la chambre d'huile 105 est transféré via un orifice 115 ménagé dans le diaphragme 104, lors d'un enfoncement de l'amortisseur. A la différence de l'amortisseur de la figure 1, la chambre d'air 106 n'est plus limitée au volume interne du tube plongeur, mais est délimitée latéralement par les parois internes du caisson 106.

L'amortisseur inversé comporte en outre une chambre de détente 107, mais celle-ci n'est plus agencée entre la tige et le tube plongeur, mais entre la tige 102 et le caisson 101. La chambre de détente 107 est cette fois alimentée en fluide hydraulique non pas par la chambre d'huile 105, mais par la chambre d'air 106, via un orifice 116 ménagé dans le palier supérieur de la tige 102 qui coulisse à étanchéité dans le caisson 101.

L'atterrisseur est équipé d'un premier ensemble émetteur/récepteur 110, installé sur le côté du caisson 101 pour émettre une onde en direction d'un réflecteur externe 113 associé à la tige 102. Après réflexion sur ledit réflecteur 113, l'onde est reçue par l'ensemble émetteur/récepteur 110. Un organe de mesure associé mesure le temps qui s'est écoulé entre l'émission et la réception de l'onde. Ce temps est représentatif du déplacement du réflecteur 113 , donc de la tige 102, et donc de l'enfoncement de l'amortisseur.

On remarquera qu'il n'a pas été ici possible de disposer l'ensemble émetteur/récepteur 110 de telle sorte que l'onde associée se propage en totalité à l'intérieur de l'amortisseur. En effet, dans un amortisseur inversé, la totalité de la partie supérieure de la tige 102 est submergée par le fluide hydraulique, de sorte qu'il n'est pas possible de faire réfléchir une onde directement sur ladite partie supérieure.

En revanche, il est possible, à l'instar d'un amortisseur classique, de disposer un deuxième ensemble émetteur/récepteur 111 sur le haut du caisson 101 de telle sorte que celui-ci envoie une onde en direction de la surface libre 112 du fluide hydraulique.

L'invention n'est pas limitée aux modalités particulières qui viennent d'être décrites, mais bien au contraire englobe toute variante entrant dans le cadre de l'invention tel que défini par les revendications.

En particulier, bien que l'on ait illustré les atterrisseurs de l'invention avec des amortisseurs équipés de deux ensembles émetteur/récepteur, on pourra se contenter d'équiper l'amortisseur d'un seul de ces ensembles, permettant d'apprécier le niveau théorique de fluide hydraulique.

Bien que la caractéristique mesurée de l'onde soit le temps écoulé entre son émission et sa réception, on pourra mesurer d'autres caractéristiques de l'onde, comme par exemple son taux de réflexion.

Enfin, bien que chacun des ensembles émetteur/récepteur ait été illustré comme étant complètement intégré dans un seul et même boîtier, l'émetteur et le récepteur pourront être physiquement séparés tout en formant un ensemble fonctionnel. Le trajet de l'onde incidente et de l'onde réfléchie pourront alors ne pas coïncider.

## Revendications

1. Procédé de vérification d'un niveau de fluide hydraulique d'un amortisseur comprenant une première partie (1;101) et une deuxième partie (2;102) mobiles entre elles à coulissement, comportant les étapes de :
- émettre une première onde apte à se propager sans support matériel à l'aide d'un premier émetteur (10;110) disposé sur la première partie mobile (1;101) en direction de la deuxième partie mobile (2;102) ;
- recevoir la première onde émise à l'aide d'un premier récepteur disposé sur la première partie mobile (1 ; 101), après réflexion de l'onde émise sur une pièce mécanique (13;113) solidaire de la deuxième partie mobile (2;102);
- déduire un niveau théorique de fluide hydraulique dans l'amortisseur qui serait celui du fluide dans l'amortisseur dans un état de conditionnement nominal de l'amortisseur, à partir d'une mesure d'une caractéristique de la première onde ainsi reçue ;
- émettre une deuxième onde apte à se propager sans support matériel à l'aide d'un deuxième émetteur (11;111) disposé sur la première partie mobile en direction de la deuxième partie mobile ;
- recevoir la deuxième onde émise à l'aide d'un deuxième récepteur disposé sur la première partie mobile après réflexion de l'onde émise sur une surface libre (12;112) du fluide hydraulique ou sur une pièce mécanique (20;21) délimitant cette surface libre ;
- déduire un niveau réel de fluide hydraulique dans l'amortisseur à partir d'une mesure d'une caractéristique de la deuxième onde ainsi reçue.
- comparer le niveau réel de fluide hydraulique au niveau théorique de fluide hydraulique.

2. Procédé selon la revendication 1, dans lequel la caractéristique des ondes qui est mesurée est un temps s'écoulant entre le moment où l'onde est émise et le moment où l'onde est reçue.

3. Atterrisseur d'aéronef comportant un amortisseur avec une première partie (1;101) et une deuxième partie (2;102) mobiles entre elles à coulissement et
un premier ensemble émetteur/récepteur d'onde (10;110) disposé sur la première partie mobile (1 ; 101), l'émetteur étant disposé pour émettre une première onde en direction de la deuxième partie mobile (2;102), et le récepteur étant apte à recevoir la première onde après réflexion de celle-ci sur un obstacle formé par une pièce mécanique (13;113) solidaire de la deuxième partie mobile (2;102) **caractérisé en ce que** l'atterrisseur comporte en outre :
- un deuxième ensemble émetteur/récepteur (11;111) indépendant disposé sur la première partie mobile, l'émetteur étant disposé pour émettre une deuxième onde en direction de la deuxième partie mobile, et le récepteur étant apte à recevoir la deuxième onde après réflexion de celle-ci sur un obstacle formé par une surface libre (12;112) d'un fluide hydraulique contenu dans l'amortisseur ou une pièce mécanique (20;21) délimitant cette surface libre;
- des moyens de calcul (50) pour déterminer un niveau théorique de fluide hydraulique dans l'amortisseur à partir de la mesure d'une caractéristique de la première onde, et pour déterminer un niveau réel de fluide hydraulique dans l'amortisseur à partir de la mesure d'une caractéristique de la deuxième onde, lesdits moyens (50) étaient agencés pour effectuer une comparaison entre le niveau théorique de fluide dans l'amortisseur et le niveau réel de fluide dans l'amortisseur.

4. Atterrisseur selon la revendication 3, dans lequel les ensembles émetteur/récepteur (10,11; 10,111) sont disposés sur l'atterrisseur de telle sorte que le cheminement des ondes émises par les ensembles émetteur/récepteur soit en totalité interne à l'amortisseur.

## Claims

1. A method of verifying a hydraulic fluid level in a shock absorber comprising first and second portions (1, 2; 101, 102) that are slidably movable relative to each other, the method comprising the steps consisting in:
• using a first transmitter (10; 110) located on the first moving portion (1; 101) to transmitting a first wave suitable for propagating without a physical medium towards the second movable portion (2; 102);
• using a first receiver disposed on the first movable portion (1; 101) to receive the first transmitted wave after the transmitted wave has been reflected on a mechanical part (13; 113) secured to the second movable portion (2; 102); and
• deducing a theoretical level of hydraulic fluid in the shock absorber from a measured characteristic of the first wave as received in this way;
• using a second transmitter (11; 111) disposed on the first movable portion to transmit a second wave suitable for propagating without a physical medium towards the second movable portion;
• using a second receiver located on the first movable portion to receive the second transmitted wave after reflection of the transmitted wave on a free surface (12; 112) of the hydraulic fluid or on a mechanical part (20; 21) defining said free surface; and
• deducing a real level of hydraulic fluid in the shock absorber from a measured characteristic of the second wave as received in this way;
• comparing the real level of hydraulic fluid and the theoretical level of hydraulic fluid.

2. A method according claim 1, in which the measured characteristic of the wave(s) is the time that elapses between the instant the wave is transmitted and the instant the wave is received.

3. An airplane undercarriage including a shock absorber having first and second portions (1, 101; 2, 102) that are slidably movable relative to each other, said undercarriage further including a first wave transceiver assembly (10; 110) disposed on the first movable portion (1; 101), the transmitter being disposed to transmit a first wave towards the second movable portion (2; 102), and the receiver being suitable for receiving the first wave after it has been reflected on an obstacle formed by a mechanical part (13; 113) secured to the second movable portion (2; 102);
**characterized in that** said undercarriage further includes:
- an independent second transceiver assembly (11; 111) disposed on the first movable portion, the transmitter being disposed to transmit a second wave towards the second movable portion, and the receiver being suitable for receiving the second wave after it has been reflected on an obstacle formed by a free surface (12; 112) of a hydraulic fluid contained in the shock absorber or a mechanical part (20; 21) defining said free surface.
- computation means (50) for determining a theoretical hydraulic fluid level into the shock absorber from a measure of a characteristic of said first wave, and for determining a real hydraulic fluid level into the shock absorber from a characteristic of said second wave, said computation means (50) being adapted to compare said theoretical fluid level and said real fluid level.

4. An undercarriage according to claim 3, **characterized in that** the transceiver assemblies (10, 11; 110, 111) are disposed on the undercarriage in such a manner that the paths followed by the waves transmitted by the transceiver assemblies are contained fully within the shock absorber.

## Patentansprüche

1. Verfahren zur Kontrolle eines Füllstandes eines Hydraulikfluids in einem Stoßdämpfer, der einen ersten Abschnitt (1; 101) und einen zweiten Abschnitt (2; 102) umfasst, die zueinander verschiebbar sind, wobei das Verfahren die Schritte umfasst:
- Aussenden einer ersten Welle, die dazu geeignet ist, sich ohne materielle Unterstützung auszubreiten, mit Hilfe eines ersten, an dem ersten beweglichen Abschnitt (1; 101) angeordneten Senders (10; 110) in Richtung des zweiten beweglichen Abschnittes (2; 102),
- Empfangen der ersten ausgesandten Welle mit Hilfe eines ersten, an dem ersten beweglichen Abschnitt (1; 101) angeordneten Empfängers nach Reflexion der ausgesandten Welle an einem mechanischen Teil (13; 113), das fest mit dem zweiten beweglichen Abschnitt (2; 102) verbunden ist,
- Herleiten eines theoretischen Füllstandes des Hydraulikfluids in dem Stoßdämpfer, welcher derjenige des Fluids in dem Stoßdämpfer in einem nominalen Konditionierungszustand des Stoßdämpfers wäre, ausgehend von einer Messung einer Eigenschaft der so empfangenen ersten Welle,
- Aussenden einer zweiten Welle, die dazu geeignet ist, sich ohne materielle Unterstützung auszubreiten, mit Hilfe eines zweiten, an dem ersten beweglichen Abschnitt angeordneten Senders (11; 111) in Richtung des zweiten beweglichen Abschnittes,
- Empfangen der zweiten ausgesandten Welle mit Hilfe eines zweiten, an dem ersten beweglichen Abschnitt angeordneten Empfängers nach Reflexion der ausgesandten Welle an einer freien Oberfläche (12; 112) des Hydraulikfluids oder an einem mechanischen Teil (20; 21), das diese freie Oberfläche begrenzt,
- Herleiten eines tatsächlichen Füllstandes des Hydraulikfluids in dem Stoßdämpfer ausgehend von einer Messung einer Eigenschaft der so empfangenen zweiten Welle,
- Vergleichen des tatsächlichen Füllstandes des Hydraulikfluids mit dem theoretischen Füllstand des Hydraulikfluids.

2. Verfahren nach Anspruch 1, bei dem die Eigenschaft der Wellen, die gemessen wird, eine Zeitspanne ist, die zwischen dem Zeitpunkt, zu dem die Welle ausgesandt wird, und dem Zeitpunkt, zu dem die Welle empfangen wird, verstreicht.

3. Flugzeug-Fahrwerk, umfassend einen Stoßdämpfer mit einem ersten Abschnitt (1; 101) und einem zweiten Abschnitt (2; 102), die zueinander verschiebbar sind, und
eine erste Sender/Empfänger-Einheit (10; 110) für Wellen, die an dem ersten beweglichen Abschnitt (1; 101) angeordnet ist, wobei der Sender so angeordnet ist, dass er eine erste Welle in Richtung des zweiten beweglichen Abschnittes (2; 102) aussendet, und der Empfänger dazu geeignet ist, die erste Welle nach deren Reflexion an einem Hindernis zu empfangen, das aus einem mechanischen Teil (13; 113) gebildet ist, das fest mit dem zweiten beweglichen Abschnitt (2; 102) verbunden ist, **dadurch gekennzeichnet, dass** das Fahrwerk ferner umfasst:
- eine unabhängige zweite Sender/Empfänger-Einheit (11; 111), die an dem ersten beweglichen Abschnitt angeordnet ist, wobei der Sender derart angeordnet ist, dass er eine zweite Welle in Richtung des zweiten beweglichen Abschnitts aussendet, und der Empfänger dazu geeignet ist, die zweite Welle nach deren Reflexion an einem Hindernis zu empfangen, das aus einer freien Oberfläche (12; 112) eines in dem Stoßdämpfer enthaltenen Hydraulikfluids oder einem diese freie Oberfläche begrenzenden mechanischen Teil (20; 21) gebildet ist,
- Rechenmittel (50) zum Bestimmen eines theoretischen Füllstandes des Hydraulikfluids in dem Stoßdämpfer ausgehend von der Messung einer Eigenschaft der ersten Welle und zum Bestimmen eines tatsächlichen Füllstandes des Hydraulikfluids in dem Stoßdämpfer ausgehend von der Messung einer Eigenschaft der zweiten Welle, wobei die genannten Mittel (50) derart ausgebildet sind, dass sie einen Vergleich zwischen dem theoretischen Füllstand des Fluids in dem Stoßdämpfer und dem tatsächlichen Füllstand des Fluids in dem Stoßdämpfer durchführen.

4. Fahrwerk nach Anspruch 3, wobei die Sender/Empfänger-Einheiten (10, 11; 110, 111) so an dem Fahrwerk angeordnet sind, dass der Weg der von den Sender/Empfänger-Einheiten ausgesandten Wellen vollständig im Inneren des Stoßdämpfers liegt.
